# EUROPÄISCHE PATENTSCHRIFT

(11) **EP 1 038 506 B1**
(45) Veröffentlichungstag und Bekanntmachung des Hinweises auf die Patenterteilung: **25.06.2003**
(21) Anmeldenummer: 00102501.4
(22) Anmeldetag: 05.02.2000
(51) Int. Cl.: A61C 8/00

(54) **Vorrichtung zur Handhabung von Dental-Implantaten**
Dental implants handling device
Dispositif de manutention d'implants dentaires

(30) Priorität: 24.03.1999 DE 19913158
(43) Veröffentlichungstag der Anmeldung: 27.09.2000
(73) Patentinhaber: Degussa Dental GmbH, 63457 Hanau (DE)
(72) Erfinder: Groll, Werner, Dr., 63755 Alzenau (DE); Kremer, Egbert, 63454 Hanau (DE)
(74) Vertreter: Stoffregen, Hans-Herbert, Dr. Dipl.-Phys.

(56) Entgegenhaltungen:
- EP-A- 0 669 111
- WO-A-98/44863
- WO-A-98/55039
- US-A- 5 062 800
- US-A- 5 692 904

## Beschreibung

Die Erfindung betrifft eine Vorrichtung zur Handhabung von Dental-Implantaten, die eine mit einer Gewindebohrung versehene Verschlußschraube und mindestens ein stirnseitiges Mitnahmeelement aufweisen, mit einer das Implantat in einem Aufnahmebehälter haltenden, lösbaren Trägernabe und einem mit dem Implantat lösbar und drehfest verbindbaren Ratscheneinsatz (wie zB in US 56 92 904 offenbart).

Dental-Implantate werden in der Zahnheilkunde in vorbereitete Bohrungen des Kiefers eingesetzt. Nach dem Lösen der Verschlußschraube wird zunächst ein Sulkusformer und später ein Pfosten in die Gewindebohrung des Implantats eingeschraubt, der den Zahnersatz trägt.

Die Entnahme des Implantats aus seinem Aufnahmebehälter und das Einsetzen müssen unter sterilen Bedingungen erfolgen. Üblicherweise ist das Implantat mit einer Trägernabe verbunden, die in ein Röhrchen eingesetzt ist. Dieses Röhrchen ist in einem mit einem Deckel verschlossenen Glasfläschchen steril verpackt. Nach dem Öffnen des Deckels des Glasfläschchens wird das innere Röhrchen zusammen mit dem Implantat entnommen, das Röhrchen wird abgezogen und das Implantat wird in einen Montageblock eingesetzt, in dem es drehfest gehalten wird. Sodann wird die Trägernabe vom Implantat abgeschraubt und ein Ratscheneinsatz wird am Implantat befestigt, indem eine sich durch eine zentrale Bohrung des Ratscheneinsatzes erstreckende Schraube in die Gewindebohrung der Verschlußschraube des Implantats eingeschraubt wird.

Der Ratscheneinsatz weist stirnseitig Vorsprünge auf, die in die stirnseitigen Mitnahmeelemente des Implantats bildende Mitnahmenuten eingreifen, so daß eine drehfeste Verbindung zwischen dem Ratscheneinsatz und dem Implantat hergestellt ist. Das Einschrauben des Implantats in die vorbereitete Bohrung im Kiefer erfolgt mittels eines am Ratscheneinsatz angreifenden Ratschenschlüssels. Danach wird der Ratscheneinsatz vom Implantat abgeschraubt.

Beim notwendigen Einsetzen des Implantats in den Montageblock, beim Lösen der Trägernabe und beim Anschrauben des Ratscheneinsatzes besteht die Gefahr, daß es zu einer Verunreinigung des Implantats kommt, wenn die Handhabung nicht sehr sorgfältig erfolgt. Außerdem ist diese Handhabung mit einem erheblichen Zeitaufwand verbunden.

Aufgabe der Erfindung ist es daher, eine Vorrichtung der eingangs genannten Gattung zur Handhabung von Dental-Implantaten so auszugestalten, daß die Handhabung wesentlich einfacher und sicherer erfolgt und somit auch die Einhaltung der sterilen Bedingungen erleichtert wird.

Diese Aufgabe wird erfindungsgemäß dadurch gelöst, daß ein Adapter mittels einer in die Gewindebohrung der Verschlußschraube eingeschraubten zentralen Schraube am Implantat befestigt ist und formschlüssig in dessen Mitnahmeelement eingreift, daß der Adapter formschlüssig und einrastend mit dem Ratscheneinsatz verbindbar ist und daß im Ratscheneinsatz ein in die zentrale Schraube eingreifender Schraubendreher drehbar angeordnet ist.

Damit wird es ermöglicht, das bereits im Aufnahmebehälter mit dem Adapter verbundene Implantat mit dem Ratscheneinsatz zu verbinden, so lange sich das Implantat noch in dem Röhrchen befindet und somit gegen eine unbeabsichtigte Verunreinigung geschützt ist. Nach dem Abziehen des Röhrchens kann das Implantat mittels des Ratscheneinsatzes gehandhabt und mittels des am Ratscheneinsatz angreifenden Ratschenschlüssels in den Kiefer eingeschraubt werden. Ein zwischenzeitliches Absetzen auf einem Montageblock entfällt.

Die Verbindung zwischen dem Ratscheneinsatz und dem das Implantat tragenden Adapter wird in sehr einfacher Weise dadurch hergestellt, daß der Ratscheneinsatz nach dem Überschieben auf den Adapter dort einrastet. Nach dem Einschrauben des Implantats in den Kiefer kann der Adapter in einfacher Weise dadurch vom Implantat gelöst werden, daß der im Ratscheneinsatz drehbar angeordnete Schraubendreher die in die Gewindebohrung der Verschlußschraube eingeschraubte zentrale Schraube löst.

Gemäß einer bevorzugten Ausführungsform der Erfindung ist vorgesehen, daß der Adapter ein äußeres Mehrkant-Schlüsselprofil aufweist, das von einem komplementären Schlüsselinnenprofil des Ratscheneinsatzes übergriffen wird. Damit ist sichergestellt, daß das zum Einschrauben des Implantats erforderliche, verhältnismäßig hohe Drehmoment sicher auf das Implantat übertragen werden kann.

Vorzugsweise ist vorgesehen, daß der Adapter an seinem äußeren Schlüsselprofil mindestens eine Rastausnehmung aufweist, in die ein federndes Rastelement des Ratscheneinsatzes einrastbar ist. Das federnde Rastelement kann von einem Federring gebildet werden, der teilweise in das Schlüsselinnenprofil des Ratscheneinsatzes ragt. Damit wird in fertigungstechnisch einfacher und platzsparende Weise eine Rastverbindung zwischen dem Ratscheneinsatz und dem das Implantat tragenden Adapter erreicht, so daß eine sichere Handhabung gewährleistet ist.

Vorzugsweise besteht die Trägernabe aus zwei Halbschalen; ein äußerer Haltevorsprung des Adapters greift in eine Haltevertiefung mindestens einer der Halbschalen ein. Dadurch wird es in sehr einfacher Weise ermöglicht, die Trägernabe nach dem Herausnehmen des Implantats aus dem Röhrchen abzunehmen.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist. Es zeigt:
Fig. 1 in einem Längsschnitt ein in einem Glasfläschchen aufgenommenes Implantat,
Fig. 2 in einem vergrößerten Teil-Längsschnitt das Implantat nach Fig. 1 nach der Verbindung mit einem Ratscheneinsatz und Entnahme aus dem Glasfläschchen,
Fig. 3 das mit dem Ratscheneinsatz gehaltene Implantat,
Fig. 4 in einer Ansicht und teilweise im Schnitt den in den Fig. 1-3 mit dem Implantat verbundenen Adapter,
Fig. 5 eine Ansicht in Richtung des Pfeiles V in Fig. 4 und
Fig. 6 die vom Adapter abgelöste und aufgeklappte Haltenabe.

Ein Dental-Implantat 1 weist ein zum Einschrauben in einen menschlichen Kiefer bestimmtes Außengewinde 2 und eine Gewindebohrung 3 auf, in die eine Verschlußschraube 4 eingeschraubt ist. Die Verschlußschraube 4 weist eine Gewindebohrung 5 auf.

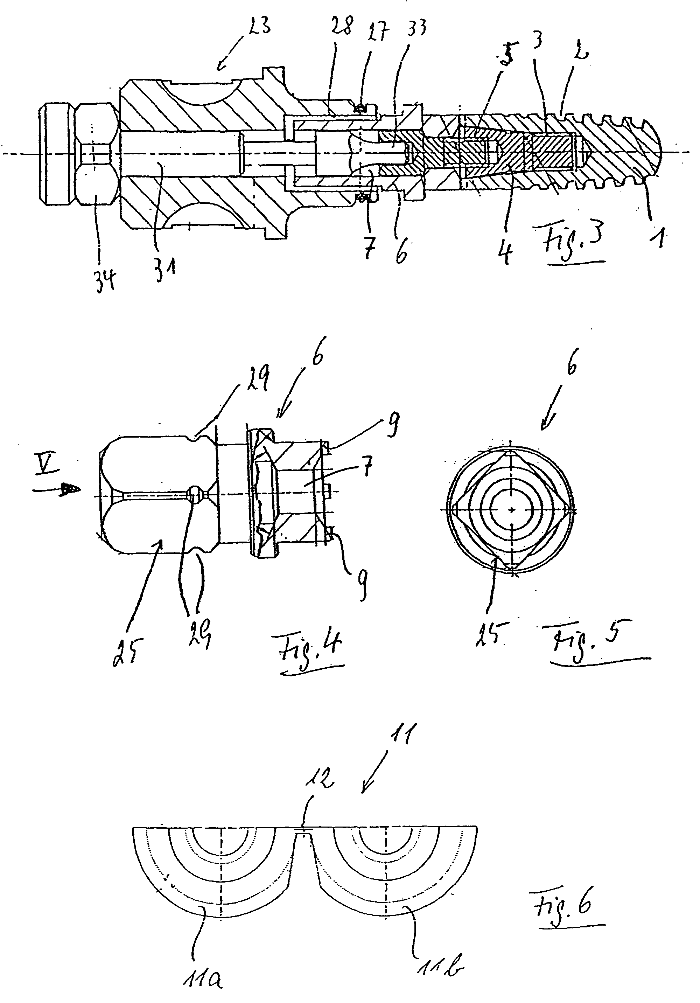

Ein im wesentlichen hülsenförmiger Adapter 6 (Fig. 4 und 5) ist stirnseitig am Implantat 1 angeschraubt. In einer zentralen Bohrung 7 des Adapters 6 ist eine zentrale Schraube 8 angeordnet, die in die Gewindebohrung 5 der Verschlußschraube 4 eingeschraubt ist.

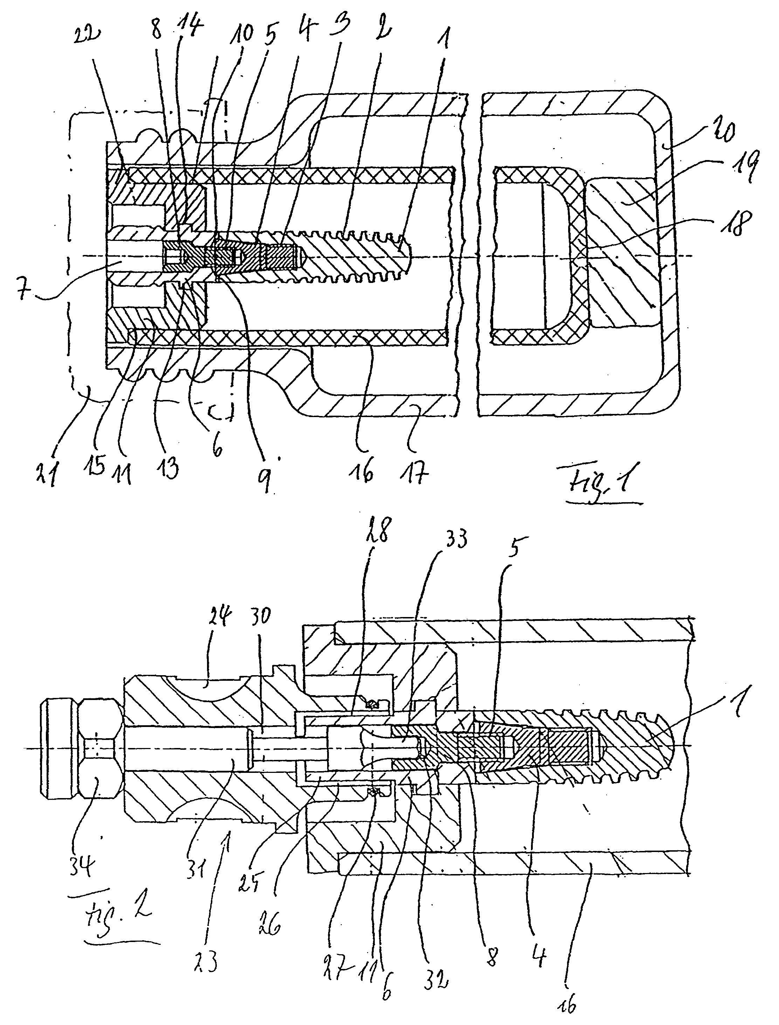

Wie in Fig. 1 gezeigt, greifen stirnseitig vorspringende Leisten 9 (Fig. 4) des Adapters 6 in stirnseitige Mitnahmenuten 10 des Implantats 1 und bilden eine drehfeste, formschlüssige Verbindung zwischen dem Adapter 6 und dem Implantat 1. Stattdessen kann auch eine andere formschlüssige drehfeste Verbindung zwischen dem Adapter 6 und dem Implantat 1 vorgesehen sein.

Eine Trägernabe 11, die aus zwei Halbschalen 11a, 11b aus Kunststoff besteht, die durch ein Filmscharnier 12 aufklappbar miteinander verbunden sind (Fig. 6) umgreift den Adapter 6. Ein äußerer Bund 13 des Adapters bildet einen äußeren Haltevorsprung, der in eine umlaufende innere Nut 14 der beiden Halbschalen 11a, 11b eingreift.

Die aus den beiden Halbschalen 11a, 11b bestehende Haltenabe 11 (Fig. 6) ist mit einer zylindrischen äußeren Fläche 15 in ein zylindrisches inneres Röhrchen 16 eingesetzt, das wiederum in ein Glasfläschchen 17 eingesetzt ist (Fig.1). Das Glasröhrchen 16 ist an seinem einen Ende durch einen Boden 18 verschlossen und stützt sich über einen elastischen Körper 19 am Boden 20 des Fläschchens 17 federnd ab. Das Fläschchen 17 ist durch eine in Fig. 1 mit strichpunktierten Linien nur angedeutete Schraubkappe 21 verschlossen und bildet einen Aufnahmebehälter, in dem das Implantat 1 steril verpackt ist und zur Verwendung bereitgestellt wird.

Der elastische Körper 19 oder ein anderes federndes Element gleicht Längenabweichungen infolge von Toleranzen aus und sorgt für eine sichere Halterung des Röhrchens 16 und des Implantats 1 im Fläschchen 17. Die aus den beiden Halbschalen 11a, 11b bestehende Haltenabe 11 weist einen von ihrer zylindrischen Außenfläche vorspringenden Bund 22 auf, der zwischen dem offenen Ende des Röhrchens 16 und der Innenfläche der Schraubkappe 21 aufgenommen ist.

Vor der Implantation wird das Glasfläschchen geöffnet und das sterile Implantat zusammen mit dem sterilen Röhrchen in das sterile Operationsfeld ausgekippt. Das Implantat 1 wird mittels eines Ratscheneinsatzes 23 ergriffen (Fig. 2) und aus dem Röhrchen 16 herausgezogen. Der Ratscheneinsatz 23 weist an seiner Außenfläche eine Profilierung 24 auf, die für den Angriff eines (nicht dargestellten) Ratschenschlüssels geeignet ist. Der Ratscheneinsatz 23 ist formschlüssig und einrastend mit dem Adapter 6 verbindbar. Hierzu weist der Adapter (Fig. 4 und 5) ein äußeres Mehrkant-Schlüsselprofil auf, beim dargestellten Ausführungsbeispiel ein Vierkantprofil (25), das von einem komplementären Schlüsselinnenprofil 26 übergriffen wird. Ein das implantatseitige Ende des Ratscheneinsatzes 23 umgreifender Federring 27 ragt jeweils im Bereich der Ecken des Vierkant-Schlüsselprofils in die innere Ausnehmung 28 des Ratscheneinsatzes 23 und greift dort federnd einrastend in Rastausnehmungen 29 an den Kanten des Vierkant-Schlüsselprofils 25 des Adapters 6.

In einer zentralen Bohrung 30 des Ratscheneinsatzes 23 ist ein Schraubendreher 31 drehbar gelagert. Die in die Gewindebohrung 5 der Verschlußschraube 4 eingeschraubte zentrale Schraube 8 weist in ihrem Schraubenkopf eine Mehrkant-Ausnehmung 32 auf, beispielsweise eine Vierkant-Ausnehmung, in die ein komplementärer Mehrkantzapfen 33 am implantatseitigen Ende des Schraubendrehers 31 eingreift. An seinem anderen, aus dem Ratscheneinsatz 23 herausragenden Ende ist der Schraubendreher 31 mit einem Schlüsselansatz 34 versehen.

Nachdem der Ratscheneinsatz 23 in der in Fig. 2 dargestellten Weise auf den Adapter 6 einrastend aufgeschoben wurde, wird das Röhrchen 16 von der Haltenabe 11 abgezogen, die wegen ihrer geteilten Ausführung vom Adapter 6 abfällt. Mittels des Ratscheneinsatzes 23 kann der Operateur das Implantat 1 in die hierfür vorbereitete Bohrung im Kiefer einsetzen und mit Hilfe eines am Ratscheneinsatz 23 angesetzten Ratschenschlüssels einschrauben. Danach wird der Schraubendreher 31 mittels eines am Schlüsselansatz 34 angesetzten Schlüssels gedreht und löst die zentrale Schraube 8 von der Verschlußschraube 4. Dadurch wird der Adapter 6 vom Implantat 1 gelöst.

## Patentansprüche

1. Vorrichtung zur Handhabung von Dental-Implantaten, die eine mit einer Gewindebohrung (5) versehene Verschlußschraube (4) und mindestens ein stirnseitiges Mitnahmeelement (10) aufweisen, mit einer das Implantat (1) in einem Aufnahmebehälter (17) haltenden, lösbaren Trägernabe (11) und einem mit dem Implantat (1) lösbar und drehfest verbindbaren Ratscheneinsatz (23),
**dadurch gekennzeichnet,**
**daß** ein Adapter (6) mittels einer in die Gewindebohrung (5) der Verschlußschraube (4) eingeschraubten zentralen Schraube (8) am Implantat (1) befestigt ist und formschlüssig in dessen Mitnahmeelement (10) eingreift,
**daß** der Adapter (6) formschlüssig und einrastend mit dem Ratscheneinsatz (23) verbindbar ist und daß im Ratscheneinsatz (23) ein in die zentrale Schraube (8) eingreifender Schraubendreher (31) drehbar angeordnet ist.

2. Vorrichtung nach Anspruch 1,
**dadurch gekennzeichnet,**
**daß** der Adapter (6) ein äußeres Mehrkant-Schlüsselprofil (25) aufweist, das von einem komplementären Schlüsselinnenprofil (26) des Ratscheneinsatzes (23) übergriffen wird.

3. Vorrichtung nach Anspruch 2,
**dadurch gekennzeichnet,**
**daß** der Adapter (6) an seinem äußeren Schlüsselprofil (25) mindestens eine Rastausnehmung (29) aufweist, in die ein federndes Rastelement (27) des Ratscheneinsatzes (23) einrastbar ist.

4. Vorrichtung nach Anspruch 3,
**dadurch gekennzeichnet,**
**daß** das federnde Rastelement von einem Federring (27) gebildet wird, der teilweise in das Schlüsselinnenprofil (28) des Ratscheneinsatzes (23) ragt.

5. Vorrichtung nach Anspruch 1,
**dadurch gekennzeichnet,**
**daß** die zentrale Schraube (8) eine Mehrkant-Ausnehmung (32) aufweist, in die ein komplementärer Mehrkantzapfen (33) des Schraubendrehers (31) eingreift.

6. Vorrichtung nach Anspruch 1,
**dadurch gekennzeichnet,**
**daß** die Trägernabe (11) aus zwei Halbschalen (11a, 11b) besteht und daß ein äußerer Haltevorsprung (13) des Adapters (6) in eine Haltevertiefung (14) mindestens einer der Halbschalen (11a, 11b) eingreift.

7. Vorrichtung nach Anspruch 6,
**dadurch gekennzeichnet,**
**daß** der äußere Haltevorsprung des Adapters (6) ein äußerer Bund (13) ist, der in eine umlaufende innere Nut (14) der beiden Halbschalen (11a, 11b) eingreift.

8. Vorrichtung nach Anspruch 6,
**dadurch gekennzeichnet,**
**daß** die beiden Halbschalen (11a, 11b) aus Kunststoff bestehen und durch ein Filmscharnier (12) aufklappbar miteinander verbunden sind.

## Claims

1. A device for handling of dental implants having a screw cap (4) provided with a tapped hole (5) and at least one driving element (10) at the end, with a detachable hub-like carrier (11) holding the implant (1) in a receiving container (17) and a ratchet insert (23) connectable in detachable and rotation-proof manner to the implant (1),
wherein
an adapter (6) is fastened to the implant (1) by means of a central screw (8) screwed into the tapped hole (5) of the screw cap (4) and engaging in positive form in the driving element (10) of said implant, and wherein the adapter (6) is connectable in positive and engaging form to the ratchet insert (23) and wherein a screwdriver (31) engaging in the central screw (8) is rotatably arranged in the ratchet insert (23).

2. Device according to Claim 1,
wherein
the adapter (6) has an external polygonal key profile (25) that is enclosed by a complementary inner key profile (26) of the ratchet insert (23).

3. Device according to Claim 2,
wherein
the adapter (6) has on its outer key profile (25) at least one engagement recess (29) into which engages a flexible engaging element (27) of the ratchet insert (23).

4. Device according to Claim 31,
wherein
the flexible engaging element is formed by a snap ring (27) that partially projects into the inner key profile (28) of the ratchet insert (23).

5. Device according to Claim 1,
wherein
the central screw (8) has a polygonal recess (32) in which engages a complementary polygonal pin (33) of the screwdriver (31).

6. Device according to Claim 1,
wherein
the hub-like carrier (11) comprises two half-shells (11a, 11b) and wherein an outer holding projection (13) of the adapter (6) engages in a holding groove (14) of at least one of the half-shells (11a, 11b).

7. Device according to Claim 6,
wherein
the outer holding projection of the adapter (6) is an outer collar (13) that engages in an all-round internal groove (14) of the two half-shells (11a, 11b).

8. Device according to Claim 6,
wherein
the two half-shells (11a, 11b) are plastic and are connected to one another in folding manner by a film hinge (12).

## Revendications

1. Dispositif pour manipuler des implants dentaires, qui présente une vis de fermeture (4) munie d'un taraudage (5) et au moins un élément d'entraînement (10) du côté frontal, avec un moyeu de support (11) détachable qui maintient l'implant (1) dans un récipient de réception (17) et avec un insert à cliquet (23) qui peut être relié à l'implant (1) de façon détachable et de façon à résister à la torsion,
**caractérisé en ce qu'**
un adaptateur (6) est fixé à l'implant (1) par une vis (8) centrale vissée dans le taraudage (5) de la vis de fermeture (4) et est en prise géométrique dans son élément d'entraînement (10), l'adaptateur (6) peut être relié à l'insert à cliquet (23) de façon mécanique et bloquante et un tournevis (31) qui a prise dans la vis (8) centrale est placé dans l'insert à cliquet (23) de façon à pouvoir tourner.

2. Dispositif selon la revendication 1,
**caractérisé en ce que**
l'adaptateur (6) présente un profil de clavetage polygonal (25) extérieur qui est recouvert par un profil intérieur de clavetage (26) complémentaire de l'insert à cliquet (23).

3. Dispositif selon la revendication 2,
**caractérisé en ce que**
l'adaptateur (6) présente sur son profil de clavetage extérieur (25) au moins un creux d'accrochage (29) dans lequel peut s'accrocher un élément d'accrochage (27) élastique de l'insert à cliquet (23).

4. Dispositif selon la revendication 3,
**caractérisé en ce que**
l'élément d'accrochage élastique est formé par une rondelle élastique (27) qui dépasse partiellement dans le profil intérieur de clavetage (28) de l'insert à cliquet (23).

5. Dispositif selon la revendication 1,
**caractérisé en ce que**
la vis (8) centrale présente un creux polygonal (32) dans lequel a prise une cheville polygonale (33) complémentaire du tournevis (31).

6. Dispositif selon la revendication 1,
**caractérisé en ce que**
le moyeu de support (11) est composé de deux demi-coquilles (11a, 11b) et une saillie de maintien (13) extérieure de l'adaptateur (6) pénètre dans un renfoncement de maintien (14) d'au moins une des demi-coquilles (11a, 11b).

7. Dispositif selon la revendication 6,
**caractérisé en ce que**
la saillie de maintien (13) extérieure de l'adaptateur (6) est un épaulement (13) extérieur qui pénètre dans une rainure (14) intérieure circulaire des deux demi-coquilles (11a, 11b).

8. Dispositif selon la revendication 6,
**caractérisé en ce que**
les deux demi-coquilles (11a, 11b) sont en matière synthétique et sont reliées l'une à l'autre de façon à pouvoir être relevées par une charnière en feuille (12).
